# FASCICULE DE BREVET EUROPEEN

(11) **EP 3 714 517 B1**
(45) Date de publication et mention de la délivrance du brevet: **18.01.2023**
(21) Numéro de dépôt: 18830903.3
(22) Date de dépôt: 20.11.2018
(51) Int. Cl.: H01S 3/13, H01S 3/00, H05G 2/00, H01S 3/10

(54) **SYSTÈME ET PROCÉDÉ DE GÉNÉRATION D'UN FAISCEAU LASER DE FORTE INTENSITÉ LOCALISÉ SPATIALEMENT**
SYSTEM UND VERFAHREN ZUR ERZEUGUNG EINES RÄUMLICH LOKALISIERTEN, HOCHINTENSIVEN LASERSTRAHLS
SYSTEM AND METHOD FOR GENERATING A SPATIALLY LOCALISED HIGH-INTENSITY LASER BEAM

(30) Priorité: 20.11.2017 FR 1760938
(43) Date de publication de la demande: 30.09.2020
(73) Titulaire: Amplitude, 33600 Pessac (FR); Centre National de la Recherche Scientifique, 75016 Paris (FR)
(72) Inventeur: ZOMER, Fabien, 91470 Limours (FR); FAVIER, Pierre, 91120 Palaiseau (FR); COURJAUD, Antoine, 33850 Leognan (FR)
(74) Mandataire: Jacobacci Coralis Harle
(86) Numéro de dépôt international: PCT/FR2018/052924
(87) Numéro de publication internationale: WO 2019/097197

(56) Documents cités:
- WO-A2-2006/130856
- US-A1- 2007 086 713

## Description

### DOMAINE TECHNIQUE AUQUEL SE RAPPORTE L'INVENTION

La présente invention concerne de manière générale le domaine des lasers.

Elle concerne plus particulièrement un système laser générant un faisceau laser de très forte intensité localisé en un point de l'espace.

Elle concerne aussi un système laser de très forte intensité destiné à interagir en un point localisé par diffusion inélastique avec un faisceau de particules chargées ou avec un échantillon à analyser.

Elle concerne en particulier un procédé et un appareil de mesure de diffusion Compton inverse généré par interaction entre un faisceau laser et un faisceau de particules chargées.

### ARRIERE-PLAN TECHNOLOGIQUE

Les accélérateurs de particules sont de grands instruments scientifiques utilisés notamment en physique fondamentale. On cherche à développer de nouvelles applications pour ces faisceaux de particules dans le domaine de l'instrumentation scientifique ou des appareils médicaux. Ces applications nécessitent le développement d'une source de rayons X intense et compacte pour l'utilisation dans un environnement médical ou d'histoire de l'art par exemple.

En particulier, on cherche à générer un rayonnement de diffusion Compton inverse basé sur l'interaction Compton entre un paquet d'électrons et un faisceau laser. Or, l'intensité du rayonnement généré par diffusion inélastique dépend à la fois du nombre de photons et du nombre d'électrons lors de l'interaction. De plus, l'intensité du rayonnement de diffusion Compton inverse n'est pas distribué de manière isotrope. En effet, l'intensité du rayonnement de diffusion Compton inverse dépend fortement de l'angle entre le faisceau d'électrons et le faisceau laser et/ou de l'angle entre le faisceau laser incident et le faisceau diffusé. On cherche donc à maximiser l'intensité du rayonnement de diffusion Compton inverse détecté.

Différents types d'accélérateurs, linéaires ou en anneau, sont envisagés pour produire des paquets d'électrons de faible énergie (de l'ordre de 50 MeV). Un anneau de stockage présente une configuration avantageuse du fait de sa compacité, son faible coût et sa facilité d'utilisation. La compacité et la faible énergie imposent des défis sur le choix de l'accélérateur de particules ainsi que sur la configuration de couplage entre le faisceau de particules et un faisceau laser.

On connait une source ELI-NP-GS qui utilise un recirculateur optique comprenant deux miroirs paraboliques et 31 paires de miroirs disposés en hélice de manière à faire circuler 32 fois une même impulsion laser de 200 mJ. Ainsi, cette même impulsion laser de 200 mJ interagit successivement en un même point de focalisation avec 32 paquets d'électrons générés à une cadence de 100 hertz (Hz). Toutefois, ce type de recirculateur optique est encombrant. De plus, le réglage des 64 miroirs dans une enceinte à vide est particulièrement complexe.

Il existe aussi des systèmes couplant un faisceau laser à une cavité Fabry-Perot pour amplifier un faisceau laser en régime stationnaire.

De manière générale, on souhaite disposer d'un système laser de forte intensité et localisé en un point déterminé.

Plus particulièrement, on cherche à développer un système pour l'interaction entre un faisceau de particules chargées et un faisceau laser de forte intensité, ce système étant de mise en œuvre aisée et qui permette d'augmenter l'intensité d'un faisceau de diffusion inélastique par effet Compton inverse généré par cette interaction.

Le document WO 2006/130856 A1 décrit une source de rayons X monochromatiques comprenant une cavité optique résonante à deux miroirs couplée à un générateur de faisceau d'électrons. La cavité optique résonante reçoit des micropulses ayant une durée de 1-10 ps qui se renforcent de manière cohérente pour former un macropulse optique, à une fréquence dans le domaine GHz. Les micropulses sont focalisés dans une zone d'interaction intracavité. Le produit de cette interaction est un macropulse de rayonnement électromagnétique énergétique, par exemple rayons X, et un micropulse d'électron d'énergie réduite.

### OBJET DE L'INVENTION

Afin de remédier aux inconvénients précités de l'état de la technique, la présente invention propose un système de génération d'un faisceau laser de forte intensité localisé spatialement, tel que défini par la revendication indépendante 1.

Plus particulièrement, on propose selon l'invention un système comportant une source laser adaptée pour générer une rafale de N impulsions laser, où N est un nombre entier naturel supérieur à 1, les N impulsions laser ayant une première fréquence de répétition (f₁), les impulsions laser étant des impulsions laser ultrabrèves de durée inférieure ou égale à 1 picoseconde et la première fréquence de répétition (f₁) est supérieure ou égale à 0,5 gigahertz, une cavité optique résonante adaptée pour recevoir et pour stocker ladite rafale de N impulsions laser, la cavité optique résonante étant adaptée pour focaliser la rafale de N impulsions laser dans une zone d'interaction de la cavité optique résonante, une distance aller-retour dans la cavité optique résonante étant égale à c/f₁, où c représente la célérité de la lumière, et un système d'asservissement adapté pour asservir la première fréquence de répétition (f₁) par rapport à la distance aller-retour dans la cavité optique résonante de manière à ce que les N impulsions de la rafale se superposent temporellement et spatialement par interférences constructives dans la zone d'interaction pour former une impulsion géante ultrabrève et de forte énergie.

Ce système permet de générer en une zone d'interaction déterminée, un faisceau laser ayant une intensité extrêmement élevée, cette impulsion laser étant de durée ultrabrève et de puissance multipliée environ d'un facteur N par la cavité optique résonante.

De préférence, N est un nombre entier naturel compris entre 10 et 1000, et de manière plus préférentielle, compris entre 100 et 300.

Dans un mode de réalisation particulier, la source laser comporte un oscillateur émettant à la première fréquence de répétition (f₁).

Dans un autre mode de réalisation particulier, la source laser comporte un amplificateur régénératif, de préférence à fibre optique, l'amplificateur optique comprenant une cavité optique primaire et le système d'asservissement est adapté pour ajuster la longueur de la cavité optique primaire de manière à asservir la première fréquence de répétition (f₁).

De préférence, la première fréquence de répétition (f₁) est supérieure ou égale à 1 GHz.

De façon avantageuse, la source laser comporte un sélecteur d'impulsion adapté pour sélectionner la rafale de N impulsions laser ultrabrèves avec une deuxième fréquence de répétition (f₂) inférieure ou égale à 4 MHz.

Selon l'invention, la cavité optique résonante comporte des miroirs disposés en configuration planaire.

Selon l'invention, la cavité optique résonante comporte deux miroirs sphériques et deux miroirs plans, les deux miroirs sphériques et deux miroirs plans étant disposés en configuration planaire.

Selon une variante ne faisant pas partie de l'invention, la cavité optique résonante comporte deux miroirs sphériques et un seul miroir plan.

De façon avantageuse, la cavité optique résonante comporte un premier miroir sphérique concave (M3), de rayon de courbure R/2, un deuxième miroir sphérique concave (M4), de rayon de courbure R/2, le premier miroir sphérique concave (M3) et le deuxième miroir sphérique concave (M4) étant disposés en configuration concentrique, la distance entre le premier miroir sphérique concave (M3) et le deuxième miroir sphérique concave (M4) étant égale à R.

Selon un aspect particulier, le système d'asservissement comporte un détecteur adapté pour détecter un signal représentatif des interférences constructives des N impulsions de la rafale dans la cavité optique résonante.

La cavité optique résonante selon l'invention est adaptée pour propager la rafale d'impulsions laser suivant une boucle repliée en forme de X, les deux miroirs sphériques étant disposés en configuration concentrique, la zone d'interaction étant située sur l'axe optique entre les deux miroirs sphériques (M3, M4), chaque miroir sphérique étant monté sur un support, chaque support comportant une ouverture adaptée pour le passage d'un faisceau de particules chargées de manière à ce que le faisceau de particules chargées se propage dans la zone d'interaction de manière synchronisée avec l'impulsion géante ultrabrève sous un angle d'incidence inférieur ou égal à 5 degrés par rapport à une direction de propagation de la rafale d'impulsions laser dans la zone d'interaction.

Selon un mode de réalisation, la cavité optique résonante est disposée dans une enceinte à vide comprenant au moins une ouverture adaptée pour recevoir la rafale de N impulsions laser ultrabrèves, ladite au moins une ouverture étant adaptée pour recevoir un faisceau de particules chargées, la cavité optique résonante étant disposée de manière à ce que le faisceau de particules chargées se propage dans la zone d'interaction sous un angle d'incidence inférieur ou égal à 5 degrés par rapport à une direction de propagation de la rafale d'impulsions laser dans la zone d'interaction.

De façon particulièrement avantageuse, la cavité optique résonante a un volume inférieur à quelques dm³ et de préférence inférieur à 1 dm³.

L'invention peut être utilisée dans un appareil de spectrométrie Raman comprenant un système de génération d'un faisceau laser de forte intensité localisé spatialement dans lequel la zone d'interaction est destinée à recevoir un échantillon à analyser, l'appareil de spectrométrie Raman comprenant un spectromètre Raman disposé de manière à mesurer un faisceau optique de diffusion Raman formé par diffusion de ladite impulsion géante ultrabrève sur l'échantillon dans la zone d'interaction.

L'invention propose également un procédé de génération d'un faisceau laser de forte intensité localisé spatialement tel que défini par la revendication indépendante 7.

L'invention peut être utilisée dans un procédé de mesure de diffusion inélastique par interaction de l'impulsion géante ultrabrève générée selon le procédé revendiqué avec un faisceau de particules chargées se propageant dans la zone d'interaction de la cavité optique résonante de manière synchronisée avec l'impulsion géante ultrabrève.

Enfin, l'invention propose un procédé de mesure de diffusion inélastique par interaction de l'impulsion géante ultrabrève générée selon le procédé revendiqué avec un échantillon disposé dans la zone d'interaction de la cavité optique résonante.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un système de génération d'impulsion laser géante ultrabrève selon l'invention ;
- la figure 2 représente schématiquement une vue en perspective d'une enceinte à vide comprenant une cavité optique résonante selon un exemple de réalisation ;
- la figure 3 représente schématiquement en perspective l'arrangement des montures de miroirs de la cavité optique résonante de la figure 2 ;
- la figure 4 représente un exemple de monture de miroirs avec ses réglages de micro-précision ;
- la figure 5 représente schématiquement un exemple de réalisation d'un arrangement de montures de miroirs formant une cavité optique résonante à 4 miroirs disposés en configuration coplanaire ;
- la figure 6 représente schématiquement en vue de perspective le couplage d'un faisceau de particules chargées avec une impulsion laser géante ultrabrève et de forte énergie focalisée en un point d'une cavité optique résonante à 4 miroirs pour former un faisceau de diffusion Compton inverse ;
- la figure 7 représente schématiquement une autre vue de l'interaction entre un faisceau de particules chargées avec un faisceau laser impulsionnel de forte énergie dans une cavité optique résonante à 4 miroirs pour former un faisceau de diffusion Compton inverse ;
- la figure 8 représente une variante de cavité optique résonante à trois miroirs ;
- la figure 9 représente schématiquement un système de génération d'impulsion laser géante ultrabrève selon une variante de l'invention.

### Dispositif et procédé

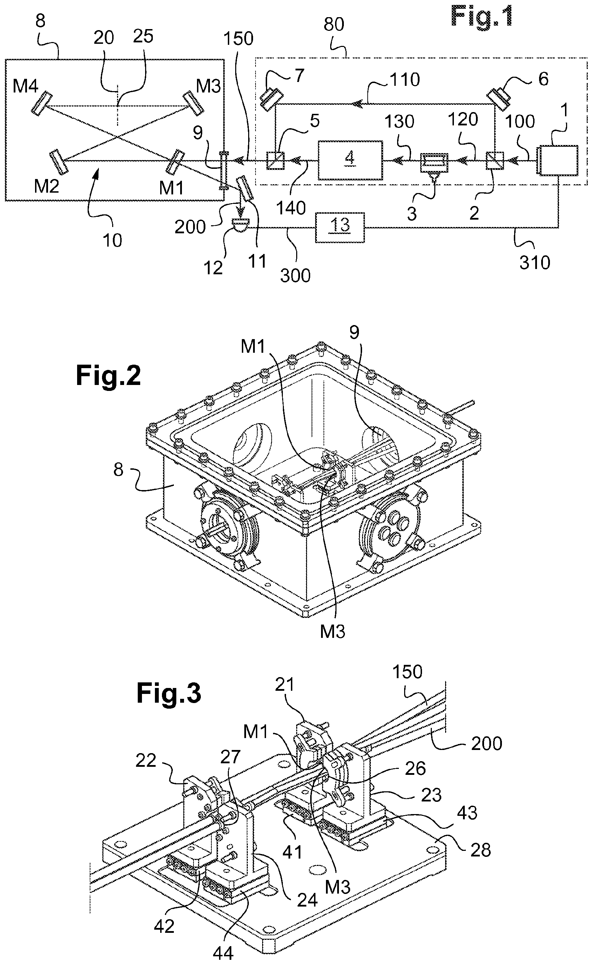

Sur la figure 1, on a représenté un système de génération d'impulsion laser géante ultrabrève.

Dans le présent document, on entend par impulsion ultrabrève, une impulsion lumineuse de durée comprise généralement entre 20 fs à environ 10 ps et une largeur spectrale de 0,1 à 50 nm.

Le système de la figure 1 comporte une source laser 80, adaptée pour générer une rafale d'impulsions laser ultrabrève et de haute énergie, combinée à une cavité optique résonante 10 et à un système d'asservissement à boucle de contre-réaction.

Dans un mode de réalisation, la source laser 80 comporte un oscillateur 1 de type impulsionnel, un séparateur de faisceau 2, un sélecteur d'impulsion 3 (ou pulse picker en anglais), un système d'amplification optique 4, un combineur de faisceau 5, des miroirs de renvoi 6 et 7. L'oscillateur 1 est basé sur une cavité laser accordable. L'oscillateur 1 est adapté pour générer des impulsions source 100 à une première fréquence de répétition, notée f₁. De façon avantageuse, la première fréquence de répétition est supérieure ou égale à 500 MHz et de préférence supérieure ou égale à 1 GHz, ou même plusieurs gigahertz. En fonction de la première fréquence de répétition f₁, les impulsions source 100 sont séparées les une des autres d'un intervalle temporel compris entre 0,3 ns et 2 ns.

Le séparateur de faisceau 2 et le combineur de faisceau 5 sont par exemple du type cube séparateur de polarisation. Dans ce cas, les impulsions source 100 sont polarisées, par exemple linéairement en sortie de l'oscillateur 1. Le séparateur de faisceau 2 est disposé et orienté de manière à séparer spatialement le faisceau d'impulsions source 100 en un faisceau d'impulsions 110 et un autre faisceau d'impulsions 120. Le faisceau d'impulsions 110 est réfléchi sur les miroirs 6, 7 et forme un faisceau d'impulsions 110 basse puissance à la première fréquence de répétition f₁.

Le sélecteur d'impulsion 3 est par exemple basé sur un modulateur électro-optique. Le sélecteur d'impulsion 3 reçoit l'autre faisceau d'impulsions 120 provenant de l'oscillateur 1 et sélectionne une rafale de N impulsions source, où N est un nombre entier naturel supérieur à 1, de préférence compris entre 25 et 10000, et de manière encore plus préférentielle entre 100 et 300. Avantageusement, le sélecteur d'impulsion 3 fonctionne à une deuxième fréquence de répétition, notée f₂, inférieure ou égale à 4 MHz. De façon alternative, le sélecteur d'impulsion 3 peut aussi fonctionner en sélectionnant une seule rafale d'impulsions. Dans une même rafale de N impulsions, les impulsions sont espacées de l'intervalle temporel déterminé par la première fréquence de répétition f₁.

Le système d'amplification optique 4 comporte un ou plusieurs amplificateurs optiques disposés en série. Le système d'amplification optique 4 peut être à base d'amplificateurs à fibre optique, à disque et/ou à solide. Le système d'amplification optique 4 reçoit une rafale de N impulsions et les amplifie pour former une rafale de N impulsions lumineuses de haute puissance. Le système d'amplification optique 4 délivre ainsi un faisceau d'impulsions 120 haute puissance constitué de rafales de N impulsions, les rafales étant généralement émises à la deuxième fréquence de répétition f₂.

Selon une variante, à la place de l'oscillateur impulsionnel haute fréquence et d'un ou plusieurs amplificateurs optiques linéaires, la source laser 80 comporte un amplificateur régénératif, de préférence à fibre optique. De préférence dans ce cas, l'amplificateur régénératif comporte une cavité optique régénérative, des moyens d'injection d'impulsions source à une période de répétition T₁ dans ladite cavité optique régénérative et des moyens d'extraction desdites impulsions laser de ladite cavité optique régénérative. Dans ce cas, la cavité optique régénérative présente une longueur totale telle que la durée d'un aller-retour de chaque impulsion dans ladite cavité optique régénérative est comprise entre N-1 et N fois la période T₁ où N est un nombre entier supérieur ou égal à deux, lesdits moyens d'injection sont adaptés pour piéger une salve de N impulsions laser dans ladite cavité optique régénérative, lesdits moyens d'extraction sont adaptés pour extraire ladite salve de N impulsions laser de ladite cavité optique régénérative et ledit milieu amplificateur optique est adapté pour former une salve d'impulsions laser amplifiées. De façon avantageuse, les moyens d'injection et les moyens d'extraction comportent une cellule de Pockels configurée de manière à être entièrement bloquante entre l'injection de la salve d'impulsions et l'extraction de ladite salve d'impulsions. De préférence, la cavité optique régénérative est une cavité multipassage et le milieu amplificateur est disposé dans ladite cavité optique régénérative multipassage de manière à ce qu'une impulsion de la salve d'impulsions effectue une pluralité de passages par le milieu amplificateur. Avantageusement, la cavité optique régénérative est une cavité multipassage comportant un système optique à miroirs disposés de manière à ce que le faisceau incident sur chacun desdits miroirs soit décalé spatialement à chaque passage dans ladite cavité multipassage et le milieu amplificateur est disposé à l'intérieur de la cavité optique régénérative.

On dispose ainsi d'une source laser générant une rafale de N impulsions laser ultrabrèves et de forte puissance, les impulsions d'une même rafale étant à la première fréquence de répétition, f₁, supérieure ou égale à 0,5 gigahertz (GHz), et de préférence supérieure ou égale à 1 GHz.

On utilise de manière équivalente dans la suite du présent document les termes suivants : salve d'impulsions, train d'impulsions, série d'impulsions ou macro-pulse (multibunch ou burst en anglais).

Le combineur de faisceau 5 est disposé et orienté de manière à recombiner spatialement le faisceau d'impulsions 110 basse puissance à la première fréquence de répétition f₁ et le faisceau d'impulsions 120 haute puissance constitué de rafales de N impulsions en un faisceau d'impulsions lumineuses 150.

Ce faisceau d'impulsions lumineuses 150 est injecté par une ouverture 9 dans l'enceinte à vide 8 comportant la cavité optique résonante.

Les figures 2 à 7 illustrent de manière détaillée une cavité optique résonante à quatre miroirs selon un premier mode de réalisation de l'invention.

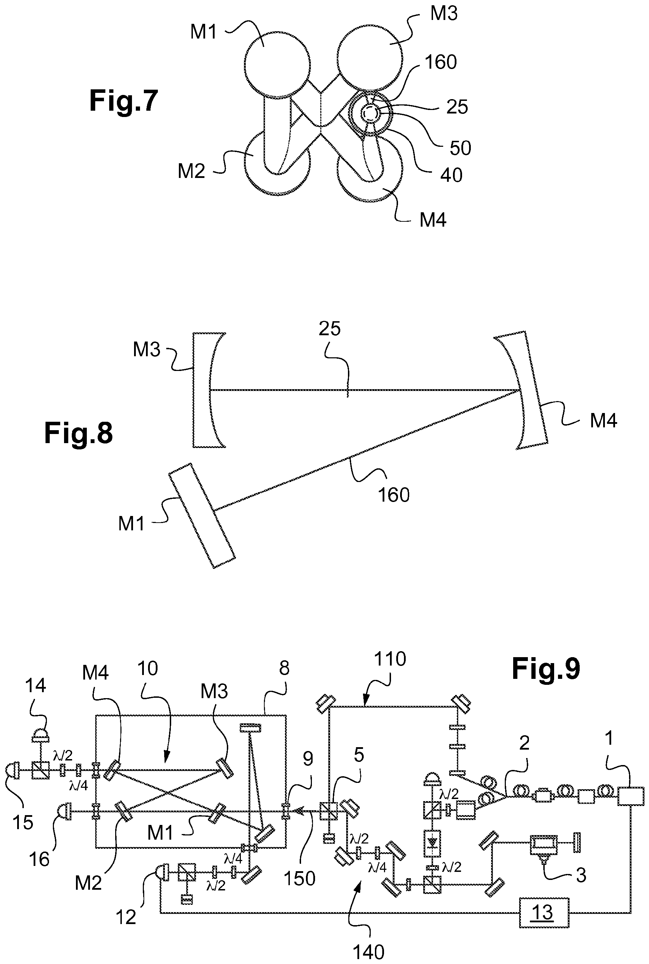

La cavité optique résonante 10 comporte deux miroirs plans M1, M2 et deux miroirs sphériques M3, M4. Les miroirs M1, M2, M3, M4 sont disposés en configuration planaire, aux extrémités d'un quadrilatère allongé. Les miroirs M3 et M4 sont disposés en configuration concentrique et ont de préférence le même rayon de courbure, R/2, la distance entre les miroirs M3 et M4 étant égale à R. Le faisceau d'impulsions 150 est injecté dans la cavité optique résonante à travers le miroir plan M1 et se dirige vers le miroir plan M2 qui le réfléchit vers le miroir sphérique M3. Le miroir M3 réfléchit le faisceau d'impulsions 150 en direction du miroir M4 tout en focalisant ce faisceau dans une zone d'interaction 25 située sur l'axe optique entre le miroir M3 et le miroir M4. Le miroir réfléchit le faisceau d'impulsions 150 en direction du miroir M1 formant ainsi un chemin optique en boucle fermée. La cavité optique résonante 10 permet ainsi de propager le faisceau d'impulsions 150 suivant une boucle repliée en forme de X (voir figure 7-8). La longueur totale d'un aller-retour dans la cavité optique résonante est ajustée de manière à ce que les N impulsion d'une même rafale se superposent de manière cohérente par interférences constructives pour former une impulsion géante dans la cavité optique résonante. De plus, la cavité optique résonante 10 focalise l'impulsion géante dans une zone d'interaction 25 par exemple dans un plan focal 20 situé entre les miroirs M3 et M4. L'impulsion géante circule N fois dans la cavité, à la cadence GHz. La cavité optique résonante 10 est remplie et vidée à la cadence de la rafale d'impulsion, c'est-à-dire à la deuxième fréquence de répétition f₂.

L'impulsion géante a la même durée que les impulsions laser de la source laser.

Pour une rafale de N ≈2000 impulsions ayant une durée de ~ 200 fs, et une énergie par impulsion source de l'ordre de 20-30 mJ, on obtient une impulsion ayant une intensité de l'ordre de 10¹⁵ W/cm² dans la zone d'interaction 25. La dimension transverse à la taille (waist) du faisceau laser est de l'ordre de 30 microns. Ainsi, l'énergie des impulsions d'une rafale est stockée au point d'interaction. De plus, l'impulsion géante peut être répétée à la deuxième fréquence de répétition dans la même zone d'interaction 25. Il est donc ainsi possible d'interagir de multiples fois avec une impulsion laser géante.

La longueur du chemin optique lors d'un aller-retour dans la cavité optique résonante 10 est déterminée en fonction de la première fréquence de répétition f₁. Plus précisément, cette longueur aller-retour est égale à c/f1 où c représente la célérité de la lumière dans la cavité optique résonante. Par exemple, pour une première fréquence de répétition f₁ de ~1 GHz, on choisit une longueur aller-retour dans la cavité optique résonante de -30 cm. La longueur physique L de la cavité optique résonante est dans ce cas de l'ordre de -15 cm et les miroirs M3 et M4 ont un rayon de courbure d'environ 8 cm. La longueur physique L de la cavité optique résonante est ici quatre fois plus faible qu'une cavité optique résonante à deux miroirs ayant la même longueur aller-retour. Dans un autre exemple, pour un oscillateur fonctionnant à une première fréquence de répétition f₁ de 3 GHz, on choisit une longueur aller-retour dans la cavité optique résonante de -10 cm et des miroirs M3, M4 ayant un rayon de courbure de l'ordre de 2,5 cm. Le diamètre des miroirs M1, M2, M3, M4 est compris entre 1 mm et quelques centimètres, par exemple de l'ordre de 6 mm (ou ¼ de pouce). Toutefois, cette configuration pose des difficultés techniques d'alignement optique de la cavité optique résonante avec la contrainte de maintien de l'efficacité de cette cavité optique résonante. Cette configuration nécessite des réglages optomécaniques miniaturisés et de très haute précision pour obtenir le réglage interférométrique souhaité. On obtient ainsi une cavité optique résonante très compacte. La cavité optique résonante est repliée ce qui permet de réduire l'encombrement de la cavité optique résonante autour de la zone d'interaction. La cavité optique résonante est aisément maniable. Cette compacité permet de placer la cavité optique résonante dans une enceinte à vide de faible volume, ce qui simplifie considérablement la mise en œuvre de ce système. La compacité de l'enceinte à vide et de la cavité optique résonante permettent une meilleure isolation vis-à-vis des vibrations environnantes et une réduction du coût de l'ensemble du système. De plus, le faible encombrement de la cavité optique résonante, même disposée dans une enceinte à vide, permet d'insérer plus facilement ce système sur une ligne de faisceau de particules chargées, dont l'environnement est généralement très encombré par divers instruments scientifiques. Cette configuration permet de réaliser plus aisément une interaction entre une impulsion laser de très forte intensité et un faisceau de particules chargées dans une zone d'interaction déterminée.

La figure 3 illustre le montage des supports des miroirs M1, M2, M3 et M4 sur une même plateforme 28. Plus précisément, le miroir M1 est monté sur un support 21, et respectivement, le miroir M2 sur un support 22, le miroir M3 sur un support 23 et le miroir M4 sur un support 24. Le support 21 est disposé sur une platine de translation 41. De manière analogue, le support 22, respectivement 23, 24 est disposé sur une platine de translation 42, respectivement 43, 44.

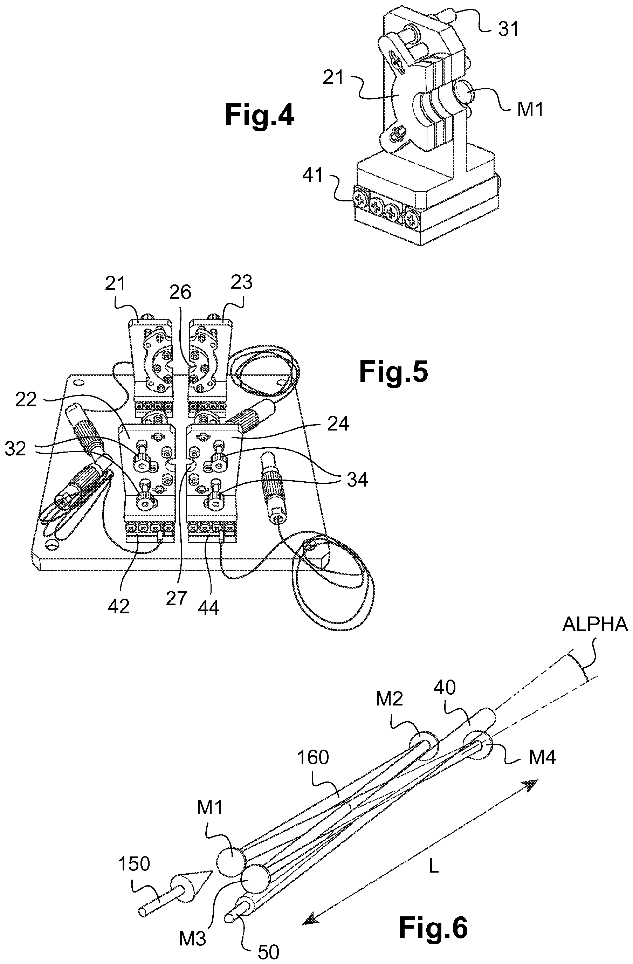

La figure 4 illustre de manière plus détaillée le montage du miroir M1 sur le support 21, muni de réglages micrométriques 31.

Plus précisément, l'oscillateur laser 1 fonctionnant en régime impulsionnel est asservi en fréquence sur la cavité optique résonante 10 afin de stocker l'énergie des impulsions laser d'une rafale par interférences constructives.

Dans la variante où un amplificateur régénératif est utilisé pour générer la rafale d'impulsions, la longueur de la cavité optique régénérative, qui détermine la première fréquence de répétition, est asservie sur la cavité optique résonante 10 afin de stocker l'énergie des impulsions laser d'une rafale par interférences constructives.

Le miroir M1 est configuré de manière à laisser passer une partie 200 du faisceau d'impulsions à basse puissance injecté simultanément avec la rafale d'impulsions dans la cavité optique résonante 10. Un détecteur 12 détecte la partie 200 du faisceau d'impulsions à basse puissance extraite de la cavité optique résonante. La partie 200 du faisceau d'impulsions à basse puissance est aussi à la première fréquence de répétition f₁.

Un système d'asservissement 13 en déduit un signal d'erreur et applique ce signal d'erreur de manière à asservir la cavité de l'oscillateur laser 1 ou, respectivement, la cavité optique régénérative de l'amplificateur régénératif. Ainsi, la première fréquence de répétition f₁ est asservie en fonction de la longueur de la cavité optique résonante de manière à maximiser l'énergie et/ou la puissance de l'impulsion géante dans une zone d'interaction 25 de la cavité optique résonante. Cette boucle d'asservissement fonctionne à une fréquence de l'ordre de 1 MHz. Ainsi, la fréquence de la source laser est asservie en fonction des dérives lentes de la longueur de la cavité optique résonante 10.

La figure 5 illustre le montage optomécanique de la cavité optique résonante à quatre miroirs. De façon particulièrement avantageuse, la cavité optique résonante 10 comporte une première ouverture 26 sur la monture 23 en dessous du miroir sphérique M3. De même, la cavité optique résonante 10 comporte une deuxième ouverture 27 sur la monture 24 au dessus du miroir M4.

La cavité optique résonante peut être implémentée sur un accélérateur de particules.

Dans une application à l'interaction entre un faisceau d'électrons et un faisceau laser, illustrée sur les figures 6 et 7, on injecte un faisceau d'électrons 40 dans la cavité optique résonante 10. Plus précisément, le faisceau d'électrons 40 est orienté de manière à passer à travers la première ouverture 26 et/ou la deuxième ouverture 27 en direction de la zone de focalisation de la cavité optique résonante 10. Ainsi, le faisceau d'électrons 40 peut interagir avec l'impulsion géante formée dans la zone d'interaction 25 de la cavité optique résonante 10. Cette interaction génère un faisceau de diffusion Compton inverse 50 qui peut être détecté.

Le diamètre des miroirs sphériques M3, M4 détermine l'angle de croisement minimal entre le faisceau de particules chargées 40 et le faisceau laser 160.

La distance entre les miroirs peut être ajustée en fonction de la distance entre paquets de particules chargées, au moyen des platines de translation 41, 42, 43 et/ou 44. Le recouvrement de l'impulsion laser géante et du faisceau de particules chargées est d'autant meilleur que l'angle de croisement ALPHA est faible et la taille transverse du faisceau laser est petite par rapport à la taille transverse du faisceau de particules chargées. On obtient, un angle de croisement ALPHA inférieur ou égal à 3 ou 4 degrés pour une cavité ayant une longueur aller-retour de -30 cm.

Ce système est particulièrement avantageux dans le cas où des paquets de particules chargées sont émis avec une période inter-paquet de l'ordre de 1 ns, c'est-à-dire à une fréquence de l'ordre du Gigahertz. En effet, la première fréquence de répétition f₁ de l'oscillateur peut être synchronisée via un deuxième système d'asservissement sur la fréquence de génération des paquets de particules chargées.

La figure 8 illustre une cavité optique résonante selon une variante à trois miroirs. Dans cette variante, la cavité optique résonante 10 comporte un miroir plan M1, d'injection, et deux miroirs sphériques M3, M4. Les trois miroirs M1, M3, M4 sont disposés en configuration planaire. De façon avantageuse, les deux miroirs sphériques M3, M4 sont disposés en configuration concentrique. Par exemple, les miroirs sphériques M3, M4 ont le même rayon de courbure, R/2, et la distance entre les miroirs M3 et M4 est égale à R. Ainsi, la zone d'interaction où l'impulsion laser géante se focalise est située à mi-distance entre le miroir M3 et le miroir M4. La longueur physique L de la cavité optique résonante à trois miroirs est ici environ trois fois plus faible qu'une cavité optique résonante à deux miroirs ayant la même longueur aller-retour.

La figure 9 illustre une variante d'un système de génération d'impulsion laser géante ultrabrève et de forte énergie, comportant en outre d'autres détecteurs 14, 15, 16 disposés de manière à détecter d'autres signaux de fuites issus des miroirs M2 et M4.

Dans une autre application, la source laser asservie sur la cavité optique résonante peut être utilisée pour générer une interaction entre un faisceau laser et un échantillon et mesurer une diffusion inélastique, par exemple de type diffusion Raman.

A cet effet, on dispose un échantillon à analyser dans la zone d'interaction 25 d'une cavité optique résonante d'un système tel que décrit ci-dessus et on collecte un faisceau lumineux formé par diffusion de l'impulsion laser géante sur l'échantillon. Un filtre sépare le faisceau lumineux diffusé en un faisceau lumineux représentatif de la composante de diffusion élastique, ou diffusion Rayleigh, et un faisceau lumineux représentatif de la composante de diffusion inélastique, par exemple de diffusion Raman. Un spectromètre analyse spectralement le faisceau lumineux de diffusion inélastique. Ce système permet d'augmenter l'intensité du faisceau lumineux de diffusion inélastique du fait de l'intensité extrêmement forte de l'impulsion laser géante incidente sur l'échantillon.

## Revendications

1. Système de génération d'un faisceau laser de forte intensité localisé spatialement comportant :
- une source laser (80) adaptée pour générer une rafale de N impulsions laser, où N est un nombre entier naturel supérieur à 1, les N impulsions laser ayant une première fréquence de répétition (f₁), les impulsions laser étant des impulsions laser ultrabrèves de durée inférieure ou égale à 1 picoseconde et la première fréquence de répétition (f₁) est supérieure ou égale à 0,5 gigahertz,
- une cavité optique résonante (10) adaptée pour recevoir et pour stocker ladite rafale de N impulsions laser, la cavité optique résonante (10) étant adaptée pour focaliser la rafale de N impulsions laser dans une zone d'interaction (25) de la cavité optique résonante (10), une distance aller-retour dans la cavité optique résonante étant égale à c/f₁, où c représente la célérité de la lumière, et
- un système d'asservissement (13) adapté pour asservir la première fréquence de répétition (f₁) par rapport à la distance aller-retour dans la cavité optique résonante de manière à ce que les N impulsions de la rafale se superposent temporellement et spatialement par interférences constructives dans la zone d'interaction (25) pour former une impulsion géante ultrabrève et de forte énergie,
**caractérisé en ce que** :
- la cavité optique résonante comporte deux miroirs sphériques (M3, M4) et deux miroirs plans (M1, M2) disposés en configuration planaire, la cavité optique résonante (10) étant adaptée pour propager la rafale d'impulsions laser suivant une boucle repliée en forme de X, les deux miroirs sphériques étant disposés en configuration concentrique, la zone d'interaction (25) étant située sur l'axe optique entre les deux miroirs sphériques (M3, M4), chaque miroir sphérique étant monté sur un support (23, 24), chaque support (23, 24) comportant une ouverture (26, 27) adaptée pour le passage d'un faisceau de particules chargées (40) de manière à ce que le faisceau de particules chargées (40) se propage dans la zone d'interaction (25) de manière synchronisée avec l'impulsion géante ultrabrève sous un angle d'incidence inférieur ou égal à 5 degrés par rapport à une direction de propagation de la rafale d'impulsions laser dans la zone d'interaction (25).

2. Système selon la revendication 1 dans lequel la source laser comporte un oscillateur (1) émettant à la première fréquence de répétition (f₁) supérieure ou égale à 1 GHz.

3. Système selon la revendication 1 dans lequel source laser (80) comporte un amplificateur régénératif comprenant une cavité optique primaire, et dans lequel le système d'asservissement (13) est adapté pour ajuster la longueur de la cavité optique primaire de manière à asservir la première fréquence de répétition (f₁).

4. Système selon l'une des revendications 1 à 3 dans lequel la source laser (80) comporte un sélecteur d'impulsion (3) adapté pour sélectionner la rafale de N impulsions laser ultrabrèves avec une deuxième fréquence de répétition (f₂) inférieure ou égale à 4 MHz.

5. Système selon l'une des revendications 1 à 4 dans lequel la cavité optique résonante (10) est disposée dans une enceinte à vide (8) comprenant au moins une ouverture (9) adaptée pour recevoir la rafale de N impulsions laser ultrabrèves, ladite au moins une ouverture (9) étant adaptée pour recevoir un faisceau de particules chargées (40).

6. Appareil de spectrométrie Raman comprenant le système selon l'une des revendications 1 à 5, dans lequel la zone d'interaction (25) est destinée à recevoir un échantillon à analyser, l'appareil de spectrométrie Raman comprenant un spectromètre Raman disposé de manière à mesurer un faisceau optique de diffusion Raman formé par diffusion de ladite impulsion géante ultrabrève sur l'échantillon dans la zone d'interaction (25).

7. Procédé de génération d'un faisceau laser de forte intensité localisé spatialement comprenant les étapes suivantes :
- génération d'impulsions laser de durée inférieure ou égale à 1 picoseconde à une première fréquence de répétition (f₁), la première fréquence de répétition étant supérieure ou égale à 0,5 gigahertz ;
- sélection d'une rafale de N impulsions laser à la première fréquence de répétition (f₁), où N est un nombre entier naturel supérieur ou égal à 1 ;
- injection de la rafale de N impulsions laser dans une cavité optique résonante (10), la cavité optique résonante (10) ayant une distance aller-retour égale à c/f₁ où c représente la célérité de la lumière dans la cavité optique résonante, la cavité optique résonante (10) étant adaptée pour focaliser la rafale de N impulsions laser dans une zone d'interaction (25) de la cavité optique résonante (10), la cavité optique résonante (10) comportant deux miroirs sphériques (M3, M4) et deux miroirs plans (M1, M2) disposés en configuration planaire, la cavité optique résonante (10) étant adaptée pour propager la rafale d'impulsions laser suivant une boucle repliée en forme de X, les deux miroirs sphériques (M3, M4) étant disposés en configuration concentrique, la zone d'interaction (25) étant située sur l'axe optique entre les deux miroirs sphériques (M3, M4), chaque miroir sphérique (M3, M4) étant monté sur un support (23, 24), chaque support (23, 24) comportant une ouverture (26, 27) ;
- asservissement de la première fréquence de répétition (f₁) par rapport à la distance aller-retour de la cavité optique résonante (10) de manière à ce que les N impulsions de la rafale se superposent temporellement et spatialement par interférences constructives dans la zone d'interaction (25) pour former une impulsion géante ultrabrève et de forte énergie ; et
- passage d'un faisceau de particules chargées (40) à travers les ouvertures (26, 27) des supports de miroirs sphériques (M3, M4) de manière à ce que le faisceau de particules chargées (40) se propage dans la zone d'interaction (25) de manière synchronisée avec l'impulsion géante ultrabrève sous un angle d'incidence inférieur ou égal à 5 degrés par rapport à une direction de propagation de la rafale d'impulsions laser dans la zone d'interaction (25).

8. Procédé de mesure de diffusion inélastique par interaction de l'impulsion géante ultrabrève générée selon le procédé de la revendication 7 avec un échantillon disposé dans la zone d'interaction (25) de la cavité optique résonante (10).

## Patentansprüche

1. System zum Erzeugen eines räumlich begrenzten starken Laserstrahls, das
- eine Laserquelle (80), die dazu ausgelegt ist, eine schnelle Folge von N Laserimpulsen zu erzeugen, wobei N eine natürliche ganze Zahl größer als eins ist, wobei die N Laserimpulse eine erste Wiederholungsfrequenz (f₁) haben, wobei die Laserimpulse äußerst kurze Laserimpulse mit einer Dauer von weniger als oder gleich 1 Pikosekunde sind und die erste Wiederholungsfrequenz (f₁) größer als oder gleich 0,5 GHz ist,
- einen optischen Hohlraumresonator (10), der dazu ausgelegt ist, die schnelle Folge von N Laserimpulsen zu empfangen und zu speichern, wobei der optische Hohlraumresonator (10) dazu ausgelegt ist, die schnelle Folge von N Laserimpulsen in einem Wechselwirkungsbereich (25) des optischen Hohlraumresonators (10) zu fokussieren, wobei die Länge eines Hin- und Rückwegs im optischen Hohlraumresonator gleich c/f₁ ist, wobei c die Lichtgeschwindigkeit ist, und
- ein Regelsystem (13), das dazu ausgelegt ist, die erste Wiederholungsfrequenz (f₁) in Bezug auf die Länge des Hin- und Rückwegs im optischen Hohlraumresonator so zu regeln, daß die N Impulse der Folge sich durch konstruktive Interferenzen im Wechselwirkungsbereich zeitlich und räumlich überlagern, um einen extrem kurzen Riesenimpuls hoher Energie zu bilden, aufweist,
**dadurch gekennzeichnet, daß**
- der optische Hohlraumresonator zwei sphärische Spiegel (M3, M4) und zwei ebene Spiegel (M1, M2) aufweist, die in ebener Aufstellung angeordnet sind, wobei der optische Hohlraumresonator (10) so ausgelegt ist, daß sich die schnelle Folge von Laserimpulsen in einer X-förmigen Schleife ausbreitet, wobei die beiden sphärischen Spiegel in einer konzentrischen Aufstellung angeordnet sind, wobei der Wechselwirkungsbereich (25) auf der optischen Achse zwischen den beiden sphärischen Spiegeln (M3, M4) liegt, wobei jeder sphärische Spiegel auf einem Halter (23, 24) angebracht ist, wobei jeder Halter (23, 24) eine Öffnung (26, 27) aufweist, die für den Durchlauf eines Strahls geladener Partikel (40) so ausgelegt ist, daß sich der Strahl geladener Partikel (40) im Wechselwirkungsbereich (25) in mit dem extrem kurzen Riesenimpuls synchronisierter Weise unter einem Einfallswinkel von weniger als oder gleich 5 Grad gegenüber einer Ausbreitungsrichtung der Folge von Laserimpulsen im Wechselwirkungsbereich (25) ausbreitet.

2. System gemäß Anspruch 1, bei dem die Laserquelle einen Oszillator (1) aufweist, der bei der ersten Wiederholungsfrequenz (f₁) größer als oder gleich 1 GHz abstrahlt.

3. System gemäß Anspruch 1, bei dem die Laserquelle (80) einen regenerativen Verstärker aufweist, der einen optischen Primärhohlraum aufweist, und bei dem das Regelsystem (13) dazu ausgelegt ist, die Länge des optischen Primärhohlraums so einzustellen, daß die erste Wiederholungsfrequenz (f₁) geregelt wird.

4. System gemäß einem der Ansprüche 1 bis 3, bei dem die Laserquelle (80) einen Impulswähler (3) aufweist, der dazu ausgelegt ist, die Folge von N ultrakurzen Laserimpulsen mit einer zweiten Wiederholungsfrequenz (f₂) kleiner als oder gleich 4 MHz auszuwählen.

5. System gemäß einem der Ansprüche 1 bis 4, bei dem der optische Hohlraumresonator (10) in einem Vakuumraum (8) angeordnet ist, der mindestens eine Öffnung (9) aufweist, die dazu ausgelegt ist, die Folge von N ultrakurzen Laserimpulsen zu empfangen, wobei die mindestens eine Öffnung (9) dazu ausgelegt ist, einen Strahl geladener Teilchen (40) zu empfangen.

6. Gerät für Ramanspektrometrie, das ein System gemäß einem der Ansprüche 1 bis 5 aufweist, bei dem der Wechselwirkungsbereich (25) dazu bestimmt ist, eine zu analysierende Probe aufzunehmen, wobei das Gerät für Ramanspektrometrie ein Ramanspektrometer aufweist, das so angeordnet ist, daß es einen optischen Ramandiffusionsstrahl mißt, der durch Diffusion des ultrakurzen Riesenimpulses auf der Probe in der Wechselwirkungszone (25) gebildet wird.

7. Verfahren zum Erzeugen eines räumlich begrenzten starken Laserstrahls, das die folgenden Schritte aufweist:
- Erzeugen von Laserimpulsen mit einer Dauer von weniger als oder gleich 1 Pikosekunde bei einer ersten Wiederholungsfrequenz (f₁), wobei die erste Wiederholungsfrequenz (f₁) größer als oder gleich 0,5 GHz ist;
- Auswahl einer Folge von N Laserimpulsen bei der ersten Wiederholungsfrequenz (f₁), wobei N eine natürliche ganze Zahl größer als oder gleich 1 ist;
- Einbringen der Folge von N Laserimpulsen in einen optischen Hohlraumresonator (10), wobei der optische Hohlraumresonator (10) eine Länge eines Hin- und Rückwegs gleich c/f₁ hat, wobei c die Lichtgeschwindigkeit im optischen Hohlraumresonator ist, wobei der optische Hohlraumresonator (10) dazu ausgelegt ist, die schnelle Folge von N Laserimpulsen in einem Wechselwirkungsbereich (25) des optischen Hohlraumresonators (10) zu fokussieren, wobei der optische Hohlraumresonator zwei sphärische Spiegel (M3, M4) und zwei ebene Spiegel (M1, M2) aufweist, die in ebener Aufstellung angeordnet sind, wobei der optische Hohlraumresonator (10) so ausgelegt ist, daß sich die schnelle Folge von Laserimpulsen in einer X-förmigen Schleife ausbreitet, wobei die beiden sphärischen Spiegel in einer konzentrischen Aufstellung angeordnet sind, wobei der Wechselwirkungsbereich (25) auf der optischen Achse zwischen den beiden sphärischen Spiegeln (M3, M4) liegt, wobei jeder sphärische Spiegel auf einem Halter (23, 24) angebracht ist, wobei jeder Halter (23, 24) eine Öffnung (26, 27) aufweist,
- Regeln der ersten Wiederholungsfrequenz (f₁) in Bezug auf die Länge des Hin- und Rückwegs im optischen Hohlraumresonator (10) derart, daß sich die N Impulse der Folge durch konstruktive Interferenzen im Wechselwirkungsbereich zeitlich und räumlich überlagern, um einen extrem kurzen Riesenimpuls hoher Energie zu bilden; und
- Hindurchführen eines Strahls geladener Teilchen (40) durch die Öffnungen (26, 27) der Halter der sphärischen Spiegel (M3, M4) derart, daß sich der Strahl geladener Partikel (40) im Wechselwirkungsbereich (25) in mit dem extrem kurzen Riesenimpuls synchronisierter Weise unter einem Einfallswinkel von weniger als oder gleich 5 Grad gegenüber einer Ausbreitungsrichtung der Folge von Laserimpulsen im Wechselwirkungsbereich (25) ausbreitet.

8. Verfahren zum Messen unelastischer Diffusion durch Wechselwirkung des gemäß dem Verfahren von Anspruch 7 erzeugten ultrakurzen Riesenimpulses mit einer im Wechselwirkungsbereich (25) des optischen Hohlraumresonators (10) angeordneten Probe.

## Claims

1. A system for generating a spatially localised high-intensity laser beam comprising:
- a laser source (80) adapted to generate a burst of N laser pulses, where N is a natural integer higher than 1, the N laser pulses having a first repetition frequency (f₁), the laser pulses being ultra-short laser pulses having a duration lower than or equal to 1 picosecond and the first repetition frequency (f₁) being higher than or equal to 0.5 gigahertz,
- a resonant optical cavity (10) adapted to receive and store said burst of N laser pulses, the resonant optical cavity (10) being adapted to focus the burst of N laser pulses to an interaction area (25) of the resonant optical cavity (10), a round-trip distance in the resonant optical cavity being equal to c/f₁, where c is the speed of light, and
- a servo control system (13) adapted to control the first repetition frequency (f₁) with respect to the round-trip distance in the resonant optical cavity so that the N pulses of the burst are temporally and spatially superimposed to each other by constructive interferences in the interaction area (25) to form an ultra-short and high-energy giant pulse,
**characterized in that**:
- the resonant optical cavity comprises two spherical mirrors (M3, M4) and two planar mirrors (M1, M2) arranged in a planar configuration, the resonant optical cavity (10) being adapted for propagating the burst of laser pulses following an X-shape folded loop, the two spherical mirrors being arranged in a concentric configuration, the interaction area (25) being located on the optical axis between the two spherical mirrors (M3, M4), each spherical mirror being mounted on a support (23, 24), each support (23, 24) comprising an opening (26, 27) adapted to the passage of a charged particle beam so that the charged particle beam (40) propagates in the interaction area (25) in synchronism with the ultra-short giant pulse under an incidence angle lower than or equal to 5 degrees with respect to a direction of propagation of the burst of laser pulses in the interaction area (25).

2. The system according to claim 1, wherein the laser source comprises an oscillator (1) emitting at the first repetition frequency (f₁) higher than or equal to 1 GHz.

3. The system according to claim 1, wherein the laser source (80) comprises a regenerative amplifier comprising a primary optical cavity, and wherein the servo control system (13) is adapted to adjust the length of the primary optical cavity so as to control the first repetition frequency (f₁).

4. The system according to any one of claims 1 to 3, wherein the laser source (80) comprises a pulse picker (3) adapted to select the burst of N ultra-short laser pulses with a second repetition frequency (f₂) lower than or equal to 4 MHz.

5. The system according to any one of claims 1 to 4, wherein the resonant optical cavity (10) is arranged in a vacuum chamber (8) comprising at least one opening (9) adapted to receive the burst of N ultra-short laser pulses, said at least one opening (9) being adapted to receive a charged particle beam (40).

6. A Raman spectrometry device comprising a system according to any one of claims 1 to 5, wherein the interaction area (25) is intended to receive a sample to be analysed, the Raman spectrometry device comprising a Raman spectrometer arranged so as to measure a Raman scattering optical beam formed by scattering of said ultra-short giant pulse on the sample of the interaction area (25).

7. A method for generating a spatially localised high-intensity laser beam, comprising the following steps:
- generating laser pulses having a duration lower than or equal to 1 picosecond at a first repetition frequency (f₁), the first repetition frequency being higher than or equal to 0.5 gigahertz;
- selecting a burst of N laser pulses at the first repetition frequency (f₁), where N is a natural integer higher than or equal to 1;
- injecting the burst of N laser pulses into a resonant optical cavity (10), the resonant optical cavity (10) having a roundtrip distance equal to c/f₁, where c is the speed of light in the resonant optical cavity, the resonant optical cavity (10) being adapted to focus the burst of N laser pulses to an interaction area (25) of the resonant optical cavity (10), the resonant optical cavity comprising two spherical mirrors (M3, M4) and two planar mirrors (M1, M2) arranged in a planar configuration, the resonant optical cavity (10) being adapted for propagating the burst of laser pulses following an X-shape folded loop, the two spherical mirrors being arranged in a concentric configuration, the interaction area (25) being located on the optical axis between the two spherical mirrors (M3, M4), each spherical mirror being mounted on a support (23, 24), each support (23, 24) comprising an opening (26, 27);
- controlling the first repetition frequency (f₁) with respect to the roundtrip distance of the resonant optical cavity (10) so that the N pulses of the burst are temporally and spatially superimposed to each other by constructive interferences in the interaction area (25) to form an ultra-short and high-energy giant pulse; and
- passage of a charged particle beam through the openings (26, 27) of the supports (23, 24) of the spherical mirrors (M3, M4) so that the charged particle beam (40) propagates in the interaction area (25) in synchronism with the ultra-short giant pulse under an incidence angle lower than or equal to 5 degrees with respect to a direction of propagation of the burst of laser pulses in the interaction area (25).

8. A method for measuring inelastic scattering by interaction of the ultra-short giant pulse generated according to the method of claim 7 with a sample placed in the interaction area (25) of the resonant optical cavity (10).
